# EUROPÄISCHE PATENTSCHRIFT

(11) **EP 3 216 627 B1**
(45) Veröffentlichungstag und Bekanntmachung des Hinweises auf die Patenterteilung: **08.05.2019**
(21) Anmeldenummer: 17158417.0
(22) Anmeldetag: 28.02.2017
(51) Int. Cl.: B60C 23/00, B60C 23/04

(54) **SYSTEM ZUR REIFENFÜLLDRUCKÜBERWACHUNG FÜR EIN NUTZFAHRZEUG**
SYSTEM FOR TYRE PRESSURE MONITORING FOR A COMMERCIAL VEHICLE
SYSTÈME DE SURVEILLANCE DE PRESSION DE PNEU POUR UN VÉHICULE UTILITAIRE

(30) Priorität: 07.03.2016 DE 102016203685
(43) Veröffentlichungstag der Anmeldung: 13.09.2017
(73) Patentinhaber: Deere & Company, Moline, IL 61265 (US)
(72) Erfinder: Baum, Bernd, 68163 Mannheim (DE); Schott, Florian, 68163 Mannheim (DE); Reinmuth, Florian, 68163 Mannheim (DE)
(74) Vertreter: Dehnhardt, Florian Christopher

(56) Entgegenhaltungen:
- EP-A2- 0 343 990
- EP-B1- 2 066 505
- US-A1- 2009 223 615
- US-A1- 2013 335 214

## Beschreibung

Die Erfindung betrifft ein System zur Reifenfülldrucküberwachung für ein Nutzfahrzeug, mit zumindest einem Fahrzeugreifen, wobei dem zumindest einen Fahrzeugreifen ein Drucksensor zur Erfassung eines Reifeninnendrucks zugeordnet ist, mit einer elektrisch steuerbaren Reifenfüllanlage zur Variation des Reifeninnendrucks, und einer mit dem Drucksensor sowie der Reifenfüllanlage kommunizierenden Kontrolleinheit, wobei die Kontrolleinheit auf Grundlage des erfassten Reifeninnendrucks einen defektbedingten Druckverlust in dem zumindest einen Fahrzeugreifen erkennt.

Ein derartiges System für ein Nutzfahrzeug ist beispielsweise aus der US 4 860 579 A bekannt, bei dem eine von einer zentralen Reifenfüllanlage umfasste mikroprozessorgesteuerte Kontrolleinheit periodisch den in zugehörigen Fahrzeugreifen herrschenden Reifeninnendruck abfragt und bei Erkennung eines übermäßigen Druckabfalls auf eine defektbedingte Leckage in einem oder mehreren der Fahrzeugreifen schließt. In einem solchen Fall versucht die zentrale Reifenfüllanlage den ursprünglichen Reifeninnendruck in dem bzw. den vom Defekt betroffenen Fahrzeugreifen wiederherzustellen. Zugleich erfolgt die Ausgabe eines auf die Durchführung eines entsprechenden Nachfüllvorgangs hinweisenden optischen Signals.

Bei fortbestehender Leckage und dadurch verursachten erneutem Druckabfall wird der Nachfüllvorgang wiederholt, wobei es aufgrund von Füllpausen zu Schwankungen des Reifeninnendrucks und damit zu einem ungewohnten, eine Weiterfahrt beeinträchtigenden Fahrverhalten des Nutzfahrzeugs kommen kann.

Auch das in Dokument US 2013/0335214 A1 beschriebene Konstantdrucksystem offenbart lediglich die Merkmale des Oberbegriffs des Anspruchs 1.

Es ist daher Aufgabe der vorliegenden Erfindung, ein verbessertes System zur Reifenfülldrucküberwachung für ein Nutzfahrzeug anzugeben.

Diese Aufgabe wird durch ein System zur Reifenfülldrucküberwachung mit den Merkmalen des Patentanspruchs 1 gelöst.

Das System zur Reifenfülldrucküberwachung für ein Nutzfahrzeug umfasst zumindest einen Fahrzeugreifen, wobei dem zumindest einen Fahrzeugreifen ein Drucksensor zur Erfassung eines Reifeninnendrucks zugeordnet ist. Des Weiteren ist eine elektrisch steuerbare Reifenfüllanlage zur Variation des Reifeninnendrucks und eine mit dem Drucksensor sowie der Reifenfüllanlage kommunizierende Kontrolleinheit vorgesehen, wobei die Kontrolleinheit auf Grundlage des erfassten Reifeninnendrucks einen defektbedingten Druckverlust in dem zumindest einen Fahrzeugreifen erkennt. Erfindungsgemäß ermittelt die Kontrolleinheit in einem Heimkehrmodus einen zeitlichen Verlauf des erkannten defektbedingten Druckverlusts. Auf Grundlage des ermittelten zeitlichen Verlaufs berechnet die Kontrolleinheit einen zum kontinuierlichen Ausgleich des Druckverlusts erforderlichen Volumenstrom und steuert diesen mittels der Reifenfüllanlage in den zumindest einen Fahrzeugreifen ein.

Insbesondere kann der kontinuierliche Ausgleich des Druckverlusts derart erfolgen, dass die Kontrolleinheit zunächst einen erhöhten Volumenstrom zur beschleunigten Wiederherstellung eines für den Reifeninnendruck einzuhaltenden Sollwerts berechnet sowie mittels der Reifenfüllanlage in den zumindest einen Fahrzeugreifen einsteuert. Danach wird die Einsteuerung mit einem zur Aufrechterhaltung des wiederhergestellten Reifeninnendrucks geeigneten niedrigeren Volumenstrom unterbrechungsfrei fortgesetzt. Der Einfachheit halber kann der Volumenstrom auch von vornherein fest gewählt werden, und zwar derart, dass nach Erkennung des Reifendefekts bzw. der durch diesen hervorgerufenen Leckage zumindest einem weiteren Druckverlust entgegengewirkt wird.

Mit anderen Worten erfolgt ein stetiger Ausgleich des Druckverlusts solange die Leckage besteht, sodass das gewohnte Fahrverhalten des Nutzfahrzeugs während des Heimkehrmodus aufrechterhalten bleibt. Dies ermöglicht eine sichere Rückkehr nach Hause oder in eine Werkstatt.

Eine Verwendung des Systems zur Reifenfülldrucküberwachung ist nicht nur in mehrrädrigen Nutzfahrzeugen wie landwirtschaftlichen Traktoren oder dergleichen denkbar, sondern ebenso gut auch im Bereich landwirtschaftlicher Anbau- oder Zusatzgeräte, sofern diese über eigene luftbefüllte Stütz-, Führungs- oder Antriebsräder verfügen.

Vorteilhafte Weiterbildungen des Systems zur Reifenfülldrucküberwachung gehen aus den Unteransprüchen hervor.

Vorzugsweise ermittelt die Kontrolleinheit, ob ein Ausgleich des Druckverlusts angesichts der zur Verfügung stehenden Füllkapazität der Reifenfüllanlage überhaupt möglich ist, wobei die Kontrolleinheit die Ausgabe einer von dem Ermittlungsergebnis abhängigen Handlungsempfehlung veranlasst. Auf diese Weise können dem Fahrer des Nutzfahrzeugs weitergehende Informationen zur Verfügung gestellt werden, die diesem eine Beurteilung ermöglichen, ob und gegebenenfalls inwieweit eine Weiterfahrt trotz des Reifendefekts vertretbar ist. So kann im Falle einer ausreichenden Füllkapazität eine Empfehlung dahingehend erfolgen, dass zwar die Fahrt mit verminderter Geschwindigkeit fortgesetzt werden kann, jedoch alsbald eine Werkstatt aufgesucht werden sollte. Übersteigt der von der Kontrolleinheit berechnete Volumenstrom hingegen die zur Verfügung stehende Füllkapazität der Reifenfüllanlage und/oder fällt der Reifeninnendruck weiterhin ab, so kann die Empfehlung auf eine sofortige Stillsetzung des Nutzfahrzeugs gerichtet sein. Um einer Beschädigung des zumindest einen Fahrzeugreifens bzw. dem Auftreten instabiler Fahrzustände entgegenzuwirken, kann ferner vorgesehen sein, dass die Kontrolleinheit einen Steuerbefehl zur Fahrtgeschwindigkeitsbegrenzung an ein in dem Nutzfahrzeug vorhandenes Motorsteuergerät übermittelt.

Des Weiteren besteht die Möglichkeit, dass die von der Kontrolleinheit durchgeführte Reifenfülldrucküberwachung mehrere dem Heimkehrmodus vorgeschaltete Eskalationsstufen aufweist. Diese dienen insbesondere der vorgelagerten Entscheidung, ob ein an dem zumindest einen Fahrzeugreifen auftretender Druckverlust tatsächlich auf einem Defekt beruht oder aber auf einem schleichenden Abbau des Reifeninnendrucks aufgrund stets hinzunehmender geringfügiger Undichtigkeiten im Bereich des Reifenmantels oder des Übergangs zur angrenzenden Felge.

Hierbei ist es möglich, dass die Kontrolleinheit in einer ersten Eskalationsstufe für den zumindest einen Fahrzeugreifen prüft, ob der Reifeninnendruck innerhalb eines gegebenen Toleranzbereichs liegt, um im Falle einer unzulässigen Abweichung die Ausgabe einer auf einen erniedrigten Reifeninnendruck hinweisenden Fahrerinformation und/oder eine Korrektur des Reifeninnendrucks durch Ansteuerung der Reifenfüllanlage zu veranlassen. Der Toleranzbereich ergibt sich hierbei aus dem für den Reifeninnendruck einzuhaltenden Sollwert. Der Sollwert wird beispielsweise seitens des Fahrers und/oder eines in dem Nutzfahrzeug vorhandenen Fahrerassistenzsystems festgelegt. In letzterem Fall erfolgt die Festlegung insbesondere auf Grundlage von Positionsinformationen eines GPS-Navigationssystems, und zwar derart, dass den jeweils befahrenen Bodenverhältnissen sowie dem aktuellen Betriebszustand des Nutzfahrzeugs Rechnung getragen wird.

Des Weiteren ist es denkbar, dass die Kontrolleinheit in einer zweiten Eskalationsstufe für den zumindest einen Fahrzeugreifen prüft, ob der Reifeninnendruck trotz einer in der ersten Eskalationsstufe durchgeführten Korrektur erneut gefallen ist, um die Ausgabe einer auf einen Reifendefekt hinweisenden Fahrerinformation zu veranlassen. Die Einführung verschiedener Eskalationsstufen ermöglicht eine verlässliche Unterscheidung der für den Druckverlust maßgeblichen Gründe sowie eine entsprechende Unterrichtung des Fahrers.

Im Falle eines mehrrädrigen Nutzfahrzeugs können die Fahrerinformationen zusätzlich Angaben über die Position des betroffenen Fahrzeugreifens enthalten.

Die Kontrolleinheit ermittelt den zeitlichen Verlauf des defektbedingten Druckverlusts vorzugsweise erst nach Durchlaufen der beiden Eskalationsstufen, sodass die Gefahr einer irrtümlichen Auslösung des Heimkehrmodus weitgehend ausgeschlossen ist.

Die Ausgabe der Handlungsempfehlung und/oder der Fahrerinformation kann beispielweise über eine mit der Kontrolleinheit kommunizierende grafische Benutzerschnittstelle erfolgen. Diese ist typischerweise als berührungsempfindlicher Bildschirm ausgebildet und steht über einen CAN-Bus mit der Kontrolleinheit in Datenaustauschverbindung. Die Ausgabe der Handlungsempfehlung und/oder der Fahrerinformation an sich erfolgt insbesondere in Form von Klartexthinweisen. Zur Erhöhung der Aufmerksamkeit können diese zusätzlich mit entsprechenden akustischen Signalen unterlegt sein, die mittels eines der grafischen Benutzerschnittstelle zugeordneten Signalgebers erzeugt werden.

Das erfindungsgemäße System zur Reifenfülldrucküberwachung für ein Nutzfahrzeug wird im Folgenden anhand der beigefügten Zeichnungen näher erläutert. Es zeigen:
- Fig. 1: ein als Blockschaltbild dargestelltes Ausführungsbeispiel des erfindungsgemäßen Systems zur Reifenfülldrucküberwachung für ein Nutzfahrzeug,
- Fig. 2: ein Flussdiagramm zur Veranschaulichung der Funktionsweise des in Fig. 1 wiedergegebenen Systems.

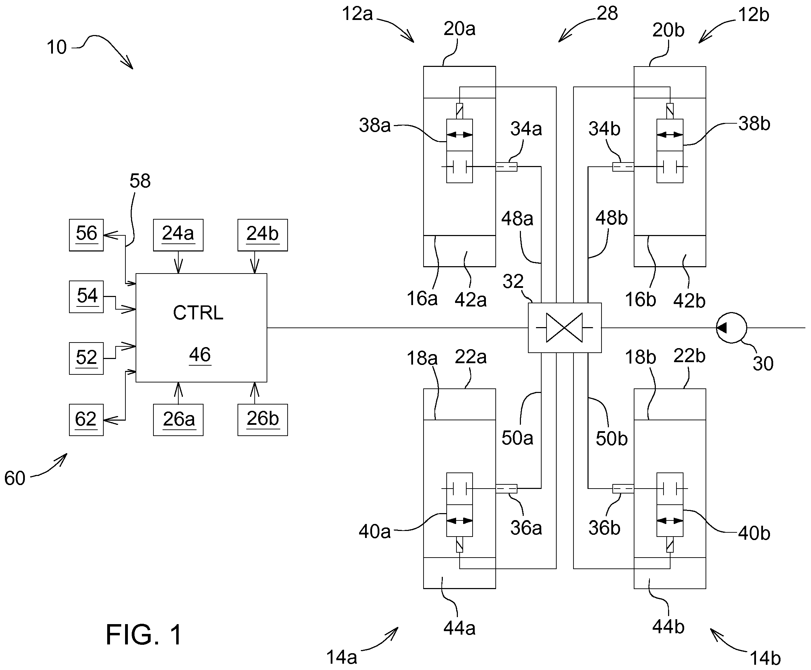

Fig. 1 zeigt ein als Blockschaltbild dargestelltes Ausführungsbeispiel des erfindungsgemäßen Systems zur Reifenfülldrucküberwachung für ein Nutzfahrzeug. Bei dem Nutzfahrzeug handelt es sich vorliegend um einen landwirtschaftlichen Traktor.

Das System 10 umfasst linke und rechte Vorderräder 12a, 12b sowie linke und rechte Hinterräder 14a, 14b. Jedes der Vorder- und Hinterräder 12a, 12b, 14a, 14b weist eine Felge 16a, 16b, 18a, 18b sowie einen auf der Felge 16a, 16b, 18a, 18b montierten Fahrzeugreifen 20a, 20b, 22a, 22b auf. Jedem der Fahrzeugreifen 20a, 20b, 22a, 22b ist ein Drucksensor 24a, 24b, 26a, 26b zur Erfassung eines jeweiligen Reifeninnendrucks zugeordnet.

Eine elektrisch steuerbare Reifenfüllanlage 28 ermöglicht eine radindividuelle Variation des Reifeninnendrucks. Hierzu weist die Reifenfüllanlage 28 eine aus einem Luftkompressor 30 gespeiste zentrale Steuerventilanordnung 32 auf, die mit den Fahrzeugreifen 20a, 20b, 22a, 22b über jeweilige Drehdurchführungen 34a, 34b, 36a, 36b sowie nachgeschaltete Radventile 38a, 38b, 40a, 40b in Verbindung steht, um eine gezielte Anpassung des Reifeninnendrucks innerhalb einer durch den Fahrzeugreifen 20a, 20b, 22a, 22b gebildeten Reifeninnenkammer 42a, 42b, 44a, 44b zu ermöglichen.

Des Weiteren umfasst das System 10 eine mikroprozessorgesteuerte Kontrolleinheit 46, die mit den Drucksensoren 24a, 24b, 26a, 26b sowie der Reifenfüllanlage 28 kommuniziert. Die Kontrolleinheit 46 bildet gemeinsam mit den Drucksensoren 24a, 24b, 26a, 26b sowie der Reifenfüllanlage 28 einen Regelkreis für einen für den Reifeninnendruck einzuhaltenden Sollwert.

Die Drucksensoren 24a, 24b, 26a, 26b können in einen Reifenmantel des jeweiligen Fahrzeugreifens 20a, 20b, 22a, 22b eingebettet sein und über eine drahtlose Datenstrecke mit der Kontrolleinheit 46 in Verbindung stehen. Vorliegend wird jedoch eine drahtgebundene Kommunikation bevorzugt, bei der die Drucksensoren 24a, 24b, 26a, 26b fahrzeugfest angebracht sind, um die zwischen der zentralen Steuerventilanordnung 32 und den Drehdurchführungen 34a, 34b, 36a, 36b in zugehörigen Versorgungsleitungen 48a, 48b, 50a, 50b herrschenden Druckverhältnisse zu erfassen. Die Radventile 38a, 38b, 40a, 40b sind in inaktivem Zustand geschlossen, sodass diese von der Kontrolleinheit 46 zur Messung des Reifeninnendrucks kurzzeitig geöffnet werden, sodass der zu messende Reifeninnendruck in der betreffenden Versorgungsleitung 48a, 48b, 50a, 50b anliegt. Abweichend davon kann auch ein einzelner (nicht dargestellter) Drucksensor in der zentralen Steuerventilanordnung 32 untergebracht sein, wobei dieser durch aufeinanderfolgendes Öffnen der Radventile 38a, 38b, 40a, 40b sequentiell mit dem zu messenden Reifeninnendruck beaufschlagt wird.

Zusätzlich steht die Kontrolleinheit 46 mit einem akustischen Signalgeber 52 sowie einem Motorsteuergerät 54 zur Beeinflussung des Betriebszustands eines von dem landwirtschaftlichen Traktor umfassten Antriebsmotors in Verbindung. Bei letzterem handelt es sich in aller Regel um einen Dieselmotor.

Die Festlegung des Sollwerts des Reifeninnendrucks erfolgt seitens des Fahrers über eine mit der Kontrolleinheit 46 kommunizierende grafische Benutzerschnittstelle 56, die vorliegend als berührungsempfindlicher Bildschirm ausgebildet ist und über einen CAN-Bus 58 mit der Kontrolleinheit 46 in Datenaustauschverbindung steht. Optional wird der Sollwert des Reifeninnendrucks seitens eines in dem Nutzfahrzeug vorhandenen Fahrerassistenzsystems 60 festgelegt, genauer gesagt auf Grundlage von Positionsinformationen eines GPS-Navigationssystems 62 unter Berücksichtigung von in der Kontrolleinheit 46 hinterlegten Spezifikationen des landwirtschaftlichen Traktors sowie der verwendeten Fahrzeugreifen 20a, 20b, 22a, 22b, sodass sich der Reifeninnendruck entsprechend den befahrenen Bodenverhältnissen sowie dem aktuellen Betriebszustand des landwirtschaftlichen Traktors (Transportfahrt auf der Straße, Bearbeitung eines Feldes mit einem landwirtschaftlichen Anbau- oder Zusatzgerät, Befahren eines unbefestigten Wirtschaftswegs, und dergleichen) selbsttätig anpassen lässt.

Aufgrund der an den Vorder- und Hinterrädern 12a, 12b, 14a, 14b auftretenden unterschiedlichen Achslasten bzw. der Verwendung unterschiedlich großer Vorder- und Hinterreifen, berechnet die Kontrolleinheit 46 ausgehend von der Fahrervorgabe bzw. der Fahrerassistenzanforderung individuelle Sollwerte des Reifeninnendrucks für die Vorder- und Hinterräder 12a, 12b, 14a, 14b.

Es sei angemerkt, dass die Darstellung eines als landwirtschaftlicher Traktor ausgebildeten Nutzfahrzeugs lediglich beispielhaften Charakter hat. So kann es sich stattdessen auch um ein an einem landwirtschaftlichen Traktor anbringbares landwirtschaftliches Anbau- oder Zusatzgerät handeln, sofern dieses über eigene luftbefüllte Stütz-, Führungs- oder Antriebsräder verfügt.

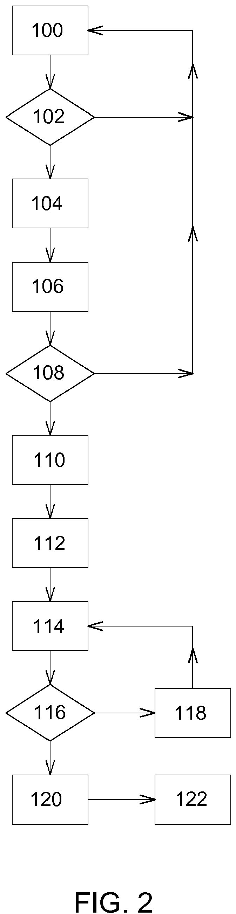

Fig. 2 zeigt ein Flussdiagramm zur Veranschaulichung der Funktionsweise des in Fig. 1 wiedergegebenen Systems 10.

In einem ersten Schritt 100 fragt die Kontrolleinheit 42 den mittels der Drucksensoren 24a, 24b, 26a, 26b für jeden der Fahrzeugreifen 20a, 20b, 22a, 22b radindividuell erfassten Reifeninnendruck ab. In einem darauffolgenden zweiten Schritt 102 überprüft die Kontrolleinheit 46, ob der erfasste Reifeninnendruck innerhalb eines durch den einzuhaltenden Sollwert gegebenen Toleranzbereichs liegt. Ergibt sich hierbei eine unzulässige Abweichung, fährt die Kontrolleinheit 46 mit einem dritten Schritt 104 fort, in dem diese im Rahmen einer ersten Eskalationsstufe durch Ansteuerung der grafischen Benutzerschnittstelle 56 die Ausgabe einer auf einen erniedrigten Reifeninnendruck hinweisenden Fahrerinformation sowie in einem vierten Schritt 106 eine Korrektur des Reifeninnendrucks durch Ansteuerung der Reifenfüllanlage 28 veranlasst. Zugleich enthalten die Fahrzeuginformationen Angaben über die Positionen sämtlicher betroffener Fahrzeugreifen 20a, 20b, 22a, 22b. Sollte sich im zweiten Schritt 102 hingegen ergeben, dass der gegebene Toleranzbereich seitens des erfassten Reifeninnendrucks eingehalten wird, kehrt die Kontrolleinheit 46 unversehens zum ersten Schritt 100 zurück.

Der Erfolg der im vierten Schritt 106 durchgeführten Druckkorrektur wird von der Kontrolleinheit 46 in einem fünften Schritt 108 durch erneute Abfrage des von den Drucksensoren 24a, 24b, 26a, 26b jeweils erfassten Reifeninnendrucks überprüft. Ergibt sich ein erneuter Abfall des Reifeninnendrucks in dem bzw. den betroffenen Fahrzeugreifen 20a, 20b, 22a, 22b, so geht die Kontrolleinheit 46 von einem Defekt aus und fährt mit einem sechsten Schritt 110 fort. In diesem veranlasst die Kontrolleinheit 46 im Rahmen einer zweiten Eskalationsstufe durch Ansteuerung der grafischen Benutzerschnittstelle 56 die Ausgabe einer auf einen möglichen Reifendefekt hinweisenden Fahrerinformation, einschließlich der erneuten Angabe der Position sämtlicher betroffener Fahrzeugreifen 20a, 20b, 22a, 22b. Andernfalls kehrt die Kontrolleinheit 46 unversehens zum ersten Schritt 100 zurück.

In einem siebten Schritt 112, also nach Durchlaufen der beiden vorgenannten Eskalationsstufen, ermittelt die Kontrolleinheit 46 in einem Heimkehrmodus einen zeitlichen Verlauf des erkannten defektbedingten Druckverlusts. Auf Grundlage des ermittelten zeitlichen Verlaufs berechnet die Kontrolleinheit 46 für jeden der betroffenen Fahrzeugreifen 20a, 20b, 22a, 22b einen zum kontinuierlichen Ausgleich des Druckverlusts erforderlichen Volumenstrom und steuert diesen mittels der Reifenfüllanlage 28 ein.

Der kontinuierliche Ausgleich des Druckverlusts erfolgt in einem achten Schritt 114 derart, dass die Kontrolleinheit 46 zunächst einen erhöhten Volumenstrom zur beschleunigten Wiederherstellung des für den Reifeninnendruck einzuhaltenden Sollwerts berechnet sowie mittels der Reifenfüllanlage 28 einsteuert. Danach wird die Einsteuerung mit einem zur Aufrechterhaltung des wiederhergestellten Reifeninnendrucks geeigneten niedrigeren Volumenstrom unterbrechungsfrei fortgesetzt. Der Einfachheit halber kann der Volumenstrom auch von vornherein fest gewählt werden, und zwar derart, dass nach Erkennung des Reifendefekts bzw. der durch diesen hervorgerufenen Leckage zumindest einem weiteren Druckverlust entgegengewirkt wird.

Mit anderen Worten erfolgt ein stetiger Ausgleich des Druckverlusts solange die Leckage besteht, sodass das gewohnte Fahrverhalten des landwirtschaftlichen Traktors während des Heimkehrmodus aufrechterhalten bleibt. Dies ermöglicht eine sichere Rücckehr nach Hause oder in eine Werkstatt.

In einem nachfolgenden neunten Schritt 116 ermittelt die Kontrolleinheit 46, ob ein Ausgleich des Druckverlusts angesichts der zur Verfügung stehenden Füllkapazität der Reifenfüllanlage 28 überhaupt möglich ist, woraufhin die Kontrolleinheit 46 durch Ansteuerung der grafischen Benutzerschnittstelle 56 eine von dem Ermittlungsergebnis abhängige Handlungsempfehlung ausgibt.

So erfolgt in einem zehnten Schritt 118 im Falle einer ausreichenden Füllkapazität eine Handlungsempfehlung dahingehend, dass zwar die Fahrt mit verminderter Geschwindigkeit fortgesetzt werden kann, jedoch alsbald eine Werkstatt aufgesucht werden sollte. Danach kehrt die Kontrolleinheit 46 zum achten Schritt 114 zurück.

Ergibt sich in einem elften Schritt 120 hingegen, dass der von der Kontrolleinheit 46 im siebten Schritt 112 berechnete Volumenstrom die zur Verfügung stehende Füllkapazität der Reifenfüllanlage 28 übersteigt und/oder der Reifeninnendruck weiterhin abfällt, so erfolgt in einem zwölften Schritt 122 eine auf die sofortige Stillsetzung des landwirtschaftlichen Traktors gerichtete Handlungsempfehlung. Um einer Beschädigung des bzw. der betroffenen Fahrzeugreifen 20a, 20b, 22a, 22b sowie dem Auftreten instabiler Fahrzustände entgegenzuwirken, ist ferner vorgesehen, dass die Kontrolleinheit 46 einen Steuerbefehl zur Fahrtgeschwindigkeitsbegrenzung an das Motorsteuergerät 54 übermittelt.

Die Ausgabe der Handlungsempfehlungen und/oder der Fahrerinformationen an sich erfolgt in Form von Klartexthinweisen. Zur Erhöhung der Aufmerksamkeit werden diese zusätzlich mit entsprechenden akustischen Signalen unterlegt, die mittels des der grafischen Benutzerschnittstelle 56 zugeordneten akustischen Signalgebers 52 erzeugt werden.

## Patentansprüche

1. System zur Reifenfülldrucküberwachung für ein Nutzfahrzeug, mit zumindest einem Fahrzeugreifen (20a, 20b, 22a, 22b), wobei dem zumindest einen Fahrzeugreifen (20a, 20b, 22a, 22b) ein Drucksensor (24a, 24b, 26a, 26b) zur Erfassung eines Reifeninnendrucks zugeordnet ist, mit einer elektrisch steuerbaren Reifenfüllanlage (28) zur Variation des Reifeninnendrucks, und einer mit dem Drucksensor (24a, 24b, 26a, 26b) sowie der Reifenfüllanlage (28) kommunizierenden Kontrolleinheit (46), wobei die Kontrolleinheit (46) auf Grundlage des erfassten Reifeninnendrucks einen defektbedingten Druckverlust in dem zumindest einen Fahrzeugreifen (20a, 20b, 22a, 22b) erkennt, **dadurch gekennzeichnet, dass** die Kontrolleinheit (46) in einem Heimkehrmodus einen zeitlichen Verlauf des erkannten defektbedingten Druckverlusts ermittelt sowie auf Grundlage des ermittelten zeitlichen Verlaufs einen zum kontinuierlichen Ausgleich des Druckverlusts erforderlichen Volumenstrom berechnet und diesen mittels der Reifenfüllanlage (28) in den zumindest einen Fahrzeugreifen (20a, 20b, 22a, 22b) einsteuert.

2. System nach Anspruch 1, **dadurch gekennzeichnet, dass** die Kontrolleinheit (46) ermittelt, ob ein Ausgleich des Druckverlusts angesichts der zur Verfügung stehenden Füllkapazität der Reifenfüllanlage (28) möglich ist, wobei die Kontrolleinheit (46) die Ausgabe einer von dem Ermittlungsergebnis abhängigen Handlungsempfehlung veranlasst.

3. System nach Anspruch 1 oder 2, **dadurch gekennzeichnet, dass** die von der Kontrolleinheit (46) durchgeführte Reifenfülldrucküberwachung mehrere dem Heimkehrmodus vorgeschaltete Eskalationsstufen aufweist.

4. System nach Anspruch 3, **dadurch gekennzeichnet, dass** die Kontrolleinheit (46) in einer ersten Eskalationsstufe für den zumindest einen Fahrzeugreifen (20a, 20b, 22a, 22b) prüft, ob der Reifeninnendruck innerhalb eines gegebenen Toleranzbereichs liegt, um im Falle einer unzulässigen Abweichung die Ausgabe einer auf einen erniedrigten Reifeninnendruck hinweisenden Fahrerinformation und/oder eine Korrektur des Reifeninnendrucks durch Ansteuerung der Reifenfüllanlage (28) zu veranlassen.

5. System nach Anspruch 4, **dadurch gekennzeichnet, dass** die Kontrolleinheit (46) in einer zweiten Eskalationsstufe für den zumindest einen Fahrzeugreifen (20a, 20b, 22a, 22b) prüft, ob der Reifeninnendruck trotz einer in der ersten Eskalationsstufe durchgeführten Korrektur erneut gefallen ist, um die Ausgabe einer auf einen Reifendefekt hinweisenden Fahrerinformation zu veranlassen.

6. System nach wenigstens einem der Ansprüche 3 bis 5, **dadurch gekennzeichnet, dass** die Kontrolleinheit (42) den zeitlichen Verlauf des defektbedingten Druckverlusts erst nach Durchlaufen der beiden Eskalationsstufen ermittelt.

7. System nach wenigstens einem der vorhergehenden Ansprüche, **dadurch gekennzeichnet, dass** die Ausgabe der Handlungsempfehlung und/oder der Fahrerinformation über eine mit der Kontrolleinheit (46) kommunizierende grafische Benutzerschnittstelle (56) erfolgt.

8. Nutzfahrzeug mit einem System (10) zur Reifenfülldrucküberwachung nach wenigstens einem der vorhergehenden Ansprüche.

## Claims

1. System for monitoring the tyre inflation pressure for a utility vehicle, having at least one vehicle tyre (20a, 20b, 22a, 22b), wherein a pressure sensor (24a, 24b, 26a, 26b) for sensing a tyre internal pressure is assigned to the at least one vehicle tyre (20a, 20b, 22a, 22b), having an electrically controllable tyre inflation system (28) for varying the tyre internal pressure and having a control unit (46) which communicates with the pressure sensor (24a, 24b, 26a, 26b) and the tyre inflation system (28), wherein the control unit (46) detects a defect-induced pressure loss in the at least one vehicle tyre (20a, 20b, 22a, 22b) on the basis of the sensed tyre internal pressure, **characterized in that** the control unit (46) determines, in a returning home mode, a chronological profile of the detected defect-induced pressure loss, and, on the basis of the determined chronological profile calculates a volume flow which is necessary for the continuous compensation of the pressure loss and the control unit inputs said volume flow into the at least one vehicle tyre (20a, 20b, 22a, 22b) by means of the tyre inflation system (28).

2. System according to Claim 1, **characterized in that** the control unit (46) determines whether it is possible to compensate for the pressure loss in view of the available inflation capacity of the tyre inflation system (28), wherein the control unit (46) brings about the outputting of an action recommendation which is dependent on the determination result.

3. System according to Claim 1 or 2, **characterized in that** the tyre inflation pressure monitoring which is carried out by the control unit (46) has a plurality of escalation stages arranged upstream of the returning home mode.

4. System according to Claim 3, **characterized in that** the control unit (46) checks, in a first escalation stage, for the at least one vehicle tyre (20a, 20b, 22a, 22b), whether the tyre internal pressure lies within a given tolerance range, in order, in the event of an unacceptable deviation, to bring about the outputting of an item of driver information which indicates a reduced tyre internal pressure and/or a correction of the tyre internal pressure by actuating the tyre inflation system (28) .

5. System according to Claim 4, **characterized in that** the control unit (46) checks, in a second escalation stage, for the at least one vehicle tyre (20a, 20b, 22a, 22b) whether the tyre internal pressure has dropped again despite a correction which has been carried out in the first escalation stage, in order to bring about the outputting of an item of driver information which indicates a tyre defect.

6. System according to at least one of Claims 3 to 5, **characterized in that** the control unit (42) determines the chronological profile of the defect-induced pressure loss only after the two escalation stages have been passed through.

7. System according to at least one of the preceding claims, **characterized in that** the action recommendation and/or the item of driver information are/is output via a graphic user interface (56) which communicates with the control unit (46).

8. Utility vehicle having a system (10) for tyre inflation pressure monitoring according to at least one of the preceding claims.

## Revendications

1. Système de surveillance de la pression de gonflage des pneus destiné à un véhicule utilitaire, comportant au moins un pneu de véhicule (20a, 20b, 22a, 22b), dans lequel un capteur de pression (24a, 24b, 26a, 26b) destiné à détecter une pression interne de pneu est associé audit au moins un pneu de véhicule (20a, 20b, 22a, 22b), comportant un dispositif de gonflage de pneu (28) pouvant être commandé électriquement et une unité de commande (46) communiquant avec le capteur de pression (24a, 24b, 26a, 26b) ainsi qu'avec le dispositif de gonflage de pneu (28), dans lequel l'unité de commande (46) détecte une chute de pression provoquée par un défaut dans ledit au moins un pneu de véhicule (20a, 20b, 22a, 22b) sur la base de la pression interne du pneu, **caractérisé en ce que** l'unité de commande (46) détermine une évolution temporelle de la chute de pression détectée, provoquée par un défaut dans un mode de retour au domicile et calcule un débit volumique nécessaire pour une compensation continue de la chute de pression sur la base de l'évolution temporelle de la chute de pression déterminée et l'applique en tant que commande audit au moins un pneu de véhicule (20a, 20b, 22a, 22b) au moyen du dispositif de gonflage de pneu (28).

2. Système selon la revendication 1, **caractérisé en ce que** l'unité de commande (46) détermine si une compensation de la chute de pression est possible compte tenu de la capacité de gonflage disponible du dispositif de gonflage de pneu (28), dans lequel l'unité de commande (46) déclenche la fourniture en sortie d'une recommandation d'action en fonction du résultat de la détermination.

3. Système selon la revendication 1 ou 2, **caractérisé en ce que** la surveillance de la pression de gonflage des pneus effectuée par l'unité de commande (46) comporte plusieurs phases de progression en amont du mode retour au domicile.

4. Système selon la revendication 3, **caractérisé en ce que**, dans une première phase de progression, l'unité de commande (46) vérifie, pour ledit au moins un pneu de véhicule (20a, 20b, 22a, 22b), si la pression interne de pneu se situe à l'intérieur d'une plage de tolérance donnée afin de déclencher la fourniture en sortie d'une information destinée au conducteur signalant, dans le cas d'un écart excessif, une pression interne de pneu réduite et/ou une correction de la pression interne de pneu par commande du dispositif de gonflage de pneu (28).

5. Système selon la revendication 4, **caractérisé en ce que**, dans une deuxième phase de progression, l'unité de commande (46) vérifie, pour ledit au moins un pneu de véhicule (20a, 20b, 22a, 22b), si la pression interne de pneu s'est encore abaissée malgré une correction effectuée dans la première phase de progression afin de déclencher la fourniture en sortie d'une information destinée au conducteur signalant un défaut du pneu.

6. Système selon l'une quelconque des revendications 3 à 5, **caractérisé en ce que** l'unité de commande (42) ne détermine l'évolution temporelle de la chute de pression provoquée par un défaut qu'après être passée par les deux phases de progression.

7. Système selon au moins l'une des revendications précédentes, **caractérisé en ce que** la fourniture en sortie de la recommandation d'action et/ou de l'information destinée au conducteur est effectuée par l'intermédiaire d'une interface utilisateur graphique (56) communiquant avec l'unité de commande (46).

8. Véhicule utilitaire comportant un système (10) de surveillance de la pression de gonflage des pneus selon au moins l'une des revendications précédentes.
